# EUROPEAN PATENT APPLICATION

(11) **EP 2 287 946 A1**
(43) Date of publication of application: **23.02.2011**
(21) Application number: 09166072.0
(22) Date of filing: 22.07.2009
(51) Int. Cl.: H01M 4/58, H01M 4/62

(54) **New electrode materials, in particular for rechargeable lithium ion batteries**

(71) Applicant: Belenos Clean Power Holding AG, 2502 Bienne (CH)
(72) Inventor: Nesper, Reinhard, CH-8873 Amden (CH)
(74) Representative: Ravenel, Thierry Gérard Louis

(57) **Abstract**

The method described allows the selection and/or design of anode and cathode materials by n- or p-doping semiconductor material. Such doped materials are suitable for use in electrodes of lithium ion batteries. As one advantage, the anode and the cathode may be produced using anodes and cathodes that are derived from the same semiconductor material.

## Description

### Technical Field

This invention relates to a method for selecting and designing new electrode materials, in particular anode and cathode materials, suitable for rechargeable lithium ion batteries, such new materials, and batteries comprising such materials.

### Background Art

Lithium ion batteries are one of the most popular types of rechargeable batteries with one of the best energy-to-weight ratios, no memory effect, and a slow loss of charge when not in use. Lithium-ion batteries are growing in popularity for many applications due to their high energy density.

The three primary functional components of a lithium ion battery are the anode, the cathode, and the electrolyte, for which a variety of materials may be used. The negative (during discharge) electrode (anode) of a conventional lithium-ion cell is made from carbon, or rather graphite. The positive (during discharge) electrode (cathode) is generally made of one of three materials, namely a layered oxide, such as lithium cobalt oxide, a polyanion based material, such as lithium iron phosphate, or a spinel structure material, such as lithium manganese oxide. The third functional component, the electrolyte, is a lithium salt in an organic solvent.

Depending on the choice of material for the anode, cathode, and electrolyte the voltage, capacity, lifetime, and safety of a lithium ion battery can change dramatically.

Both the anode and cathode are materials into which and from which lithium can migrate. The process of lithium moving into the anode or cathode is referred to herein as intercalation, and the reverse process, in which lithium moves out of the anode or cathode is referred to as deintercalation. When a cell is discharging the lithium is extracted from the anode and inserted into the cathode. When the cell is charging, the reverse process occurs, i.e. lithium is extracted from the cathode and inserted into the anode.

Useful work can only be extracted if not only lithium ions are moved but also electrons flow through an external circuit. Therefore the ease of electron removal and receipt are relevant.

The reaction and the numbers of cycles are e.g. limited by the generation of stable compounds, i.e. compounds that under charging conditions are no longer reversible, such as e.g. Li₂O.

Although new electrode materials have been developed during the past years, there is still a need for better materials with e.g. higher capacity and/or more recharging cycles.

### Disclosure of the Invention

Hence, it is a general object of the invention to provide a method for designing and selecting electrode materials for anodes and/or cathodes.

Now, in order to implement these and still further objects of the invention, which will become more readily apparent as the description proceeds, the method of the present invention is manifested by the features that it comprises the steps
A) choosing a basic semiconductor material said basic semiconductor material being selected from the group consisting of nitrides, carbides, borides, arsenides, antimonides, sulfides, phosphides, oxides, hydrides and combinations thereof, said basic semiconductor materials comprising at least two different elements having electronegativities of at least 1.5 and being in a stable, preferably their highest (most positive) oxidation or in their highest (most negative) reduction state, respectively,
B) selecting from the materials provided in A) those materials that have a crystal structure allowing for the intercalation/deintercalation of Li ions with low deformation work.
C) selecting from the basic semiconductor materials provided in A) materials having a large energy gap or band gap ΔE, respectively, between the valence band and the conduction band,
D) selecting or designing a lithium comprising active electrode material that upon charging releases lithium and/or an active electrode material that upon charging takes up lithium, said active electrode material being based on the basic semiconductor materials of A), and
E) selecting from the materials of D) active electrode materials with improved features by weighing the criteria of B) and C) against each other,
wherein the sequence of B) to D) is free.

It is a further object of the present invention to provide suitable electrode material.

It is still a further object of the present invention to provide a battery (or at least the galvanic element thereof) comprising at least one, preferably both electrodes obtainable by the method of the present invention, and preferably based on the same basic material.

Surprisingly the inventors have found that the quality of electrode materials can be predicted and electrode materials may be designed if certain criteria are optimized, e.g. in that the inventive method is applied, said method comprising STEPS A) to E).

STEP A) comprises choosing a basic semiconductor material said basic semiconductor material being selected from the group consisting of nitrides, carbides, borides, arsenides, antimonides, sulfides, phosphides, oxides, hydrides and combinations thereof, but primarily from the group consisting of nitrides, carbides, borides phosphides and combinations thereof, such as nitrides, carbides, borides and combinations thereof, said basic semiconductor materials comprising at least two different elements having electronegativities of at least 1.5 and being in a stable (e.g. V+III), preferably their highest (most positive) oxidation or (most negative) reduction state, respectively.

STEP B comprises selecting from the materials provided in STEP A those materials that have a crystal structure allowing for the intercalation/deintercalation of Li ions with as few deformation work as possible. Such materials are e.g. those having feedthrough (Gitterlücke) in their crystal lattice and/or large interplanar spaces.

Suitable materials are e.g. those having one of the following crystal structures: graphite and heterographites, sodium chloride, caesium chloride, zinc blende (sphalerite) and wurtzite, silicon nitride, tungsten carbide, nickel arsenide, calcium fluoride, rutile/brookite/anatase, cadmium chloride/cadmium iodide, pyrites, spinels, and garnets. Also suitable are borides, carbides and phosphides.

STEP C comprises selecting from the materials provided in STEP A materials having a large energy gap ΔE between the highest occupied molecular orbital (HOMO)and the lowest unoccupied molecular orbital (LUMO) or - in better conformity with solids - a large band gap between the valence band and the conduction band. Further on in the description the terms "energy gap" and "band gap" will be used largely synonymously. In general, the gap ΔE should be 3V or more to get the desired performance.

STEP D comprises selecting or designing lithium comprising material that upon charging releases lithium and/or that upon charging takes up lithium based on the materials of STEP A. Both kinds of materials, i.e. the Li intercalating and the Li deintercalating materials, may be based on the same basic semiconductor material. Such materials derived from the basic semiconductor material are also termed doped materials, more specific p-doped or n-doped materials, respectively.

Upon charging, further to the movement of Li⁺-ions, in case of p-doping electronic states in the valence band will be emptied, while in case of n-doping conduction band states will be populated.

Thus, this method allows to select n-doped anode and p-doped cathode materials based on the same basic semiconductor material.

For charging the anode, Li ions are intercalated into a "stable" semiconductor material. For cathode formation, some of the lattice places, usually occupied by the less electronegative atom, and any feedthrough and/or interspaces are "filled" with Li such that a not charged stable cathode material results that upon charging deintercalates lithium. Suitable materials are e.g. BC or rather p- and n-doped M^{II}B₂C₂ with M being a bivalent metal, preferably Mg, a neutral material similar to LiBC but having feedthrough that upon doping results in e.g. LiₓMgB₂C₂ and LiₓMg₁₋ₓBC. Further anode materials are, LiₓMN such as LiₓVN, LiₓMC such as LiₓTiC and Liₓsic and respective cathode materials are LiₓM_{1-x/3}N such as LiₓV_{1-x/3}N, LiₓM_{1-x/4}C such as LiₓTi_{1-x/4}C and LiₓSi₁-x/4^{C}.

STEP E comprises selecting from the materials of STEP D electrode materials with desired features by weighing the criteria of STEP B and STEP C against each other.

Since STEP B and STEP C are independent from each other, they may be performed in any sequence, i.e. simultaneously or in parallel, respectively, or STEP B before STEP C or STEP C before STEP B. In addition STEP B and/or STEP C may be performed prior to or after STEP D. In the cases where STEP B and/or STEP C are performed prior to STEP D a pre-selection takes place that may be advantageous.

These criteria or the method described above, respectively, may analogously be applied to graphite and metals. Similar to the doping of semiconductor materials, in case of p-doping of metals electronic states below the Fermi level will be emptied and in case of n-doping electronic states above the Fermi-level will be populated.

The electrochemical potential to be achieved will be at maximum the difference of the energies between fully p-doped and fully n-doped situations for the semiconductor and for the metal cases, respectively. The potential profiles depend on the individual band gaps and on the courses of the actual densities of states which are dependent on the types of compounds, compositions and structures. To achieve a large potential and at the same time a big electrochemical capacity, the energy difference between the n-doped and the p-doped levels must be as far apart as possible and maxima of the density of states (DOS) should be at or close to these levels.

Semiconductor materials being suitable for double utilization in a battery are e.g. those fulfilling the following criteria:
1. Hard lattice nitrides, carbides, borides, arsenides, antimonides, sulfides, phosphides, oxides, hydrides and combinations thereof, in particular nitrides, carbides, borides and combinations thereof.
2. High lattice energy leading to large band gaps
3. Intercalation sites/vacancies for n-doping
4. Diffusion channels for dopants to be able to move in and out.

Metals being suitable for double utilization in the battery are e.g. those fulfilling the following criteria:
1. Semi-metals or meta-metals which are characterized by a low density of states at the Fermi level and thus shift E_{Fermi} on both p-doping and n-doping.
2. High lattice energy leading to a step band at the Fermi level
3. Intercalation sites/vacancies for n-doping
4. Diffusion channels for dopants to be able to move in and out.

The group of semi-metals and meta-metals comprises B, C, Si, Ge, As, Sb, Te, Po, Bi, P, Se, Sn, Ga, Zn, Cd, Hg, In, Tl, Pb, wherein the boundary between semi-metals and meta-metals is floating. In the scope of this invention, primarily B, C, Si, P and Sn are of interest. In addition, some of the elements listed above, such as e.g. C, need to be in specific modifications to provide the characteristic features. While the anode may e.g. be pure Si (or Si doped with P), for use as cathode, the Si must be doped, e.g. with Al.

During charging the battery, at least part of the feedthrough of the anode is filled by intercalating lithium atoms or ions, respectively, thereby reducing the oxidation state of the less electronegative element with electronegativity beyond 1.5, while the cathode looses lithium ions thereby elevating the oxidation state of the more electronegative element with electronegativity beyond 1.5.

Since in the undoped state the active electrode materials of the present invention have poor to no conductivity, it is preferred that in the electrodes that also form part of the present invention these active electrode materials are present in nanoparticulate form. The active electrode material nanoparticles preferably are conductively coated, e.g. by a graphene or graphite layer, and they may be connected by using a conductively filled binder, e.g. a graphite and/or carbon black filled binder, and/or by using a nanoparticulate conductive binder, optionally and preferably also conductively filled with a nanoparticulate conductive filler such as graphite and/or carbon black. Electrically conductive binders are preferably electrically conductive polymers selected from polyacetylenes, polyanilines, polypyrrols and polythiophenes. A preferred binder is poly(3,4-ethylenedioxythiophene) (PEDOT).

Such electrodes are suitably used in rechargeable batteries together with usual electrolytes, such as liquid electrolytes. Suitable electrolytes comprise and preferably consist of lithium salts, e.g. LiPF₆ or LiBF₄, in an organic solvent, such as an ether. The conductivity of a liquid electrolyte is temperature dependent and typically is at least 10 mS/cm at room temperature (20°C). Organic solvents used for the electrolyte often are decomposed. Thus, unless decomposition can be reduced or even eliminated, solvents decomposed to form a solid layer (usually called the solid electrolyte interphase (SEI)) are preferred. Such solvent for example is ethylene carbonate.

### Brief Description of the Drawings

The invention will be better understood and objects other than those set forth above will become apparent when consideration is given to the following detailed description thereof. Such description makes reference to the annexed Figure:
The Figure schematically represents the density of states (DOS) for a semiconductor/insulator solid (lower part of the Figure with denotation of the band gap) and for a metal (upper part of the Figure with denotation of the Fermi-level (E_{FERM})). For both kinds of material classes the effects of p-doping (black filled parts of DOS) and n-doping (grey shaded parts of DOS) are outlined.

### Modes for Carrying Out the Invention

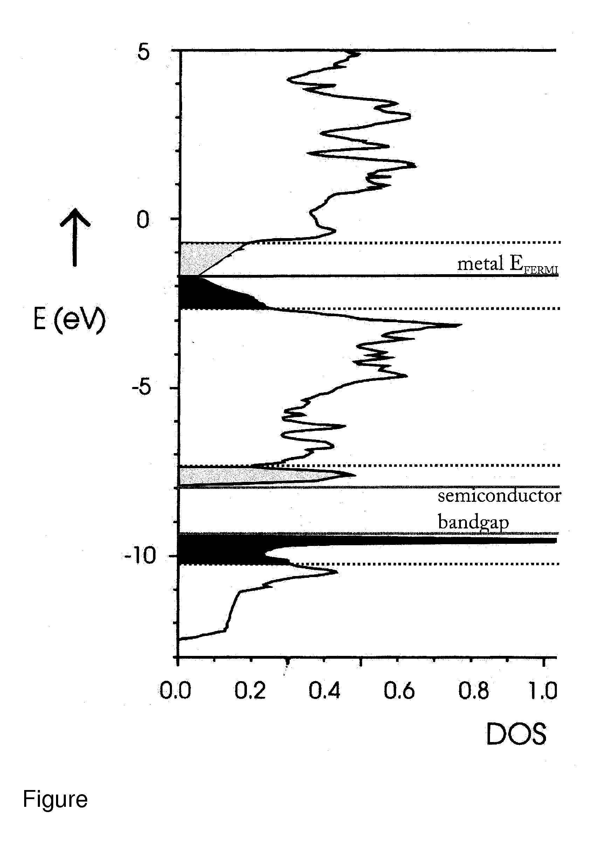

According to the present invention, electrode materials are selected/designed based on a specific method. This method allows to select anode and cathode materials based on the same semiconductor material. In case of p-doping electronic states in the valence band (lower black filled part in Figure 1) will be emptied. For n-doping conduction band states (lower grey filled part in Figure 1) will be populated.

These criteria may analogeously be applied to graphite and metals. Similar to the doping of semiconductor materials, in case of p-doping of metals electronic states below the Fermi level (upper black filled part in Figure 1) will be emptied and in case of n-doping electronic states above the Fermi-level (upper grey filled part in Figure 1) will be populated.

The electrochemical potential to be achieved will be at maximum the difference of the energies between fully p-doped and fully n-doped situations for the semiconductor and for the metal cases, respectively. These are the energy differences between the doped horizontal lines in either of the two cases shown in Figure 1. The potential profiles depend on the individual band gaps and on the courses of the actual densities of states which are dependent on the types of compounds, compositions and structures. To achieve a large potential and at the same time a big electrochemical capacity, the doped lines must be as far apart as possible and maxima of the DOS should be at or close to the doped lines.

Semiconductor materials being suitable for this kind of double utilization in the battery are e.g. those fulfilling the following criteria:
1. Hard lattice nitrides, carbides, borides, arsenides, antimonides, sulfides, phosphides, oxides, hydrides and combinations thereof, preferably nitrides, carbides, borides and combinations thereof
2. High lattice energy leading to large band gaps
3. Intercalation sites/vacancies for n-doping
4. Diffusion channels for dopants to be able to move in and out.

Preferred semiconductor materials are nitrides, carbides, borides, arsenides, antimonides, sulfides, oxides, phosphides, hydrides and combinations thereof. Preferred combinations are oxynitrides (O/N), carbonitrides (C/N), boronitrides (B/N), thionitrides (S/N), hydroborides (H/B) and hydronitrides (H/N).

Metals being suitable for this kind of double utilization in the battery are e.g. those fulfilling the following criteria:
1. Semi or meta metals which are characterized by a low density of states at the Fermi level and thus shift E_{Fermi} on both p-doping and n-doping.
2. High lattice energy leading to a step band at the Fermi level
3. Intercalation sites/vacancies for n-doping
4. Diffusion channels for dopants to be able to move in and out.

Information on relevant material characteristics can be found in literature, e.g. in R. Hoffmann, Solids and Surfaces, VCH 1987.

In the following Table 1 suitable crystal structures for nitrides, carbides, borides, arsenides, antimonides, sulfides, oxides, phosphides, hydrides and combinations thereof with specific examples are given.

**Table 1:Exemplary semiconductor materials**

| **Structure Type** | **Examples** |
|---|---|
| graphite and hetero-graphites | carbon, MgB₂, LiBC, MgB₂C₂, BN |
| sodium chloride | TiB, TiC, VN |
| caesium chloride | TiB, TiC, VN |
| zinc blende (sphalerite) and wurtzite | Al₄C₃, SiC |
| silicon nitride | C₃N₄, Si₃N₄ |
| tungsten carbide | WC |
| nickel arsenide | NiAs, VN, CoC, NiC, MX, wherein M = Ti, V, Cr, Mn, Fe, Co, Ni; X = P, As, Sb, S, Se, Te |
| calcium fluoride | MNO, wherein |
| | M = Nb, V, Cr, Mn |
| rutile/brookite/anatase | VN₂, MnN₂, MgH₂ |
| cadmium chloride/cadmium iodide | TiS₂, ZrS₂, SnS₂, MNO, wherein |
| | M = Nb, V, Cr, Mn |
| pyrites | Fe(+II)S(-I)₂, MC₂, wherein M = 3d transition metal group |
| spinels | M'M₂X₄, wherein |
| | M', M = Ti, V, Cr, Mn, Fe, Co, |
| | ni, Be, Mg, A1; |
| | X = (N/0), (N/C) |
| garnets | M₃M'₂(SiX₄)_{3,} wherein |
| | M = V, Cr, Mn, Fe; |
| | M' = Mg, Al, Zn; |
| | X = (N/O), (N/C) |

| **Variable Structure Types** | **Examples** |
|---|---|
| borides | M₄B, M₃B, M₂B, M₅B₂, M₇B₃, M₂B₅, MB₄, MB₆, MB₁₂, wherein M = 3d transition metal, main group metal |
| phosphides | Li₃P, LiMP, LiₓNa₃₋ₓP |
| carbides | CaC₂, Li₂C₂, MgC₂, Mg₂C₂, BeC₂ |

Preferred nitrides, carbides, borides and combinations thereof are listed in Table 2 wherein much preferred compounds are marked in bold:

**Table 2: Preferred semiconductor materials**

| **Structure Type** | **Examples** |
|---|---|
| graphite and hetero-graphites | carbon, MgB₂, **LiBC, MgB₂C₂, BN** |
| sodium chloride | **TiB, TiC, VN** |
| caesium chloride | **TiB, TiC, VN** |
| zinc blende (sphalerite) and wurtzite | **Al₄C₃, SiC** |
| silicon nitride | C₃N₄, **Si₃N₄** |
| tungsten carbide | WC |
| nickel arsenide | NiAs, **VN,** CoC, NiC, **MX,** wherein |
| | M = **Ti, V,** Cr, **Mn,** Fe, Co, Ni; |
| | X = **P,** As, Sb, **S,** Se, Te |
| rutile/brookite/anatase | VN₂, MnN₂ |
| borides | **M₄B, M₃B,** M₂B, M₅B₂, M₇B₃, M₂B₅, **MB₄, MB₆,** MB₁₂, wherein M = 3d transition metal, main group metal |
| spinels | M'M₂X₄, wherein |
| | M', M = **Ti, V,** Cr, **Mn, Fe,** Co, |
| | Ni, **Be,** Mg, **Al;** |
| | X = **(N/C)** |
| garnets | **M₃M'₂(SiN₄)₃,** wherein |
| | M = **V,** Cr, **Mn, Fe;** |
| | M**'** = **Mg,** Al, **Zn;** |

Examples for basic semiconductor materials as well as thereof derived p-doped and n-doped materials are listed in Table 3, wherein Me is an alkaline earth metal, preferably Mg. Although for ease of demonstration doping with integer atoms is listed, it has to be understood that often Li will be incorporated upon charging or decharging, respectively, in amounts of much less than one lithium per unit cell or formula, e.g. the formula shown in Table 3.

**Table 3: "Doped" materials**

| **basic material** | **Li doping leads to "unfavorable" oxidation states in the nonoxidic ceramic part of the composition upon charging (electrode upon discharging)** | |
|---|---|---|
| | **p-doped (cathode)** (affects preferred negative oxidation state; negative oxidation state becomes less negative) | **n-doped (anode)** (affects preferred positive oxidation state; positive oxidation state becomes less positive) |
| LiBC or **MgB₂C₂*** (B^{+III}, C^{-IV}) | LiₓMg₁₋ₓ/2^{B}2^{C}2 **←→** Mg₁-x/₂B₂C₂ | LiₓMgB₂C₂ **←→** MgB₂C₂ |
| | Li₂B₂C₂ **←→** Li₂₋ₓB₂C₂ | |
| **Al₄C₃** (Al^{+III}, C^{-IV}) | LiₓAl_{4-x/3}C₃ **←→** Al_{4-x/3}C₃ | LiₓAl₄C₃ **←→** Al₄C₃ |
| **MgAl₂C₂** (Al^{+III}, C^{-IV}) | LiₓMg_{1-x/2}Al₂C₂ **←→** Mg_{1-x/2}Al₂C₂ | LiₓMgAl₂C₂ **←→** MgAl₂C₂ |
| **SiC** (Si^{+IV}, C^{-IV}) | LiₓSi_{1-x/4}C₄ **←→** Si_{1-x/4}C₄ | LiₓSiC **←→** SiC |
| **B₄C₃** (B^{+III}, C^{-IV}) | LiₓB4-x/3C₃ **←→** B_{4-x/3}C₃ | LiₓB₄C₃ **←→** B₄C₃ |
| **B₄C** (B^{+I}, C^{-IV}) | LiₓB₄₋ₓC **←→** B₄₋ₓC | LiₓB₄C **←→** B₄C |
| **BN** (_{B}^{+III}, N^{-III}) | LiₓB_{1-x/3}N **←→** B_{1-x/3}N | LiₓBN **←→** BN |
| **Zn₂C** (Zn^{+II}, C^{-IV}) | LiₓZn_{2-x/2}C **←→** Zn_{2-x/2}C | LiₓZn₂C **←→** Zn₂C |
| **VN** (V^{+III}, N^{-III}) | Li₃V₂N₃ **←→** V₂N₃ | LiₓVN **←→** VN |
| **TiC** (Ti^{+IV}, C^{-IV}) | LiₓTi_{1-x/4}C **←→** Ti_{1-x/4}C | LiₓTiC **←→** TiC |
| **MnN** (Mn^{+III}, N^{-III}) | LiₓMn_{1-x/3}N **←→** Mn_{1-x/3}N | LiₓMnN **←→** MnN |

| | | |
|---|---|---|
| **similar crystal structure leads to "voids" in crystal lattice that can easily be occupied by Li* | | |

The group of semi metals and meta metals encompasses B, C, Si, Ge, As, Sb, Te, Po, Bi, P, Se, Sn, Ga, Zn, Cd, Hg, In, Tl, and Pb. In the scope of the present invention the presently preferred metals are B, C, Si, P and Sn.

Suitable exemplary dopants for semi metals and meta metals are listed in Table 4:

**Table 4: Dopants for semi-metals and meta-metals**

| Semi metals and meta metals | anode | | cathode | |
|---|---|---|---|---|
| | no-dopant | n-dopant | no dopant | p-dopant |
| Si | Si | P | ---* | Al |
| P | P | S | ---* | Si |
| C | C | N | ---* | B |
| B | B | C | ---* | Be |

| | | | | |
|---|---|---|---|---|
| * not possible | | | | |

Examples for electrode relevant features of materials selected according to the present invention are listed in Tables 5 and 6.

**Table 5: New and known anode materials with indication of specific electrode relevant features**

| **Anode Material** | **Average Voltage** | **Gravimetric Capacity** |
|---|---|---|
| Graphite (LiC₆)* | 0.1-0.2 V | 372 mAh/g |
| Si (Li_{4.4}Si) * | 0.5-1 V | 4212 mAh/g |
| Ge (Li_{4.4}Ge) * | 0.7-1.2 V | 1624 mAh/g |
| MgB₂C₂ (LiₓMgB₂C₂) | 0.5 V | 425 mAh/g |
| P (Li₃P) | 0.8 - 1.5 V | approx. 1200 mAh/g |

| | | |
|---|---|---|
| * already known material for comparison | | |

**Table 6: New and known cathode materials with indication of specific electrode relevant features**

| **Cathode Material** | **Average Voltage** | **Gravimetric Capacity** | **Δx (Li deintercalation)** |
|---|---|---|---|
| LiCoO₂* | 3.7 V | 140 mAh/g | 0.5 |
| LiMₙ2O₄* | 4.0 V | 100 mAh/g | 1.0 |
| LiFePO₄* | 3.3 V | 150 mAh/g | 1.0 |
| Li₂FePO₄F* | 3.6 V | 115 mAh/g | 1.0 |
| LiBC | 4.6 V | 640 mAh/g | 0.5 |
| LiBC | 4.6 V | 1280 mAh/g | 1.0** |

| | | | |
|---|---|---|---|
| * already known material for comparison ** irreversible | | | |

The advantage of batteries produced with anodes and cathodes that are based on the same semiconductor material are:
1. Reduction of dissolution problems of electronically active materials (EAMs) into the electrolyte
2. Reduction of surface catalysis problems
3. Simplification of the solid state and surface diffusion processes
4. Simplification of the SEI (solid electrolyte interface) formation.

In addition, a simplification of the production process may be possible because only one basic material has to be handled.

Materials of the present invention may e.g. be produced by low temperature ammonolysis reaction or by reaction of urea and acetylides with transition metal halides.

While there are shown and described presently preferred embodiments of the invention, it is to be distinctly understood that the invention is not limited thereto but may be otherwise variously embodied and practiced within the scope of the following claims.

## Claims

1. A method for providing active electrode materials suitable for use in lithium ion batteries, said method comprising
A) choosing a basic semiconductor material said basic semiconductor material being selected from the group consisting of nitrides, carbides, borides, arsenides, antimonides, sulfides, phosphides, oxides, hydrides and combinations thereof, said basic semiconductor materials comprising at least two different elements having electronegativities of at least 1.5 and being in a stable, preferably their highest (most positive) oxidation or in their highest (most negative) reduction state, respectively,
B) selecting from the materials provided in A) those materials that have a crystal structure allowing for the intercalation/deintercalation of Li ions with low deformation work,
C) selecting from the basic semiconductor materials provided in A) materials having a large energy gap or band gap ΔE, respectively, between the valence band and the conduction band,
D) selecting or designing lithium comprising active electrode material that upon charging releases lithium and/or active electrode material that upon charging takes up lithium, said active electrode material being based on the basic semiconductor materials chosen in A), and
E) selecting from the materials of D) active electrode materials with improved features by weighing the criteria of B) and C) against each other,
wherein the sequence of B) to D) is free.

2. The method of claim 1, wherein the basic material is selected from the group consisting of nitrides, carbides, borides and combinations thereof.

3. The method of claim 1 or 2, wherein the weighing in step E) comprises selecting from the materials provided in D) those materials that allow for the intercalation/deintercalation of Li ions with minimized deformation work.

4. The method of any one of the preceding claims, wherein the materials are selected from those having a crystal structure selected from the group consisting of graphite and heterographites, sodium chloride, caesium chloride, zinc blende (sphalerite) and wurtzite, silicon nitride, tungsten carbide, nickel arsenide, calcium fluoride, rutile/brookite/anatase, cadmium chloride/cadmium iodide, pyrites, spinels, and garnets, or from borides, carbides and phosphides preferably from the group consisting of graphite and heterographites, sodium chloride, caesium chloride, zinc blende (sphalerite) and wurtzite, silicon nitride, tungsten carbide, nickel arsenide, rutile/brookite/anatase, spinels, garnets, borides, carbides and phosphides.

5. The method of any one of the preceding claims, wherein the sequence of steps B) to D) is:
(i) B) **→** C) **→** D)
(ii) C) **→** B) **→** D)
(iii) D) **→** B) **→** C)
(iv) D) **→** C) **→** B).

6. An anode or cathode comprising as active electrode material a p-doped or an n-doped material based on a basic semiconductor material selected from the group consisting of nitrides, carbides, borides and combinations thereof, wherein preferred combinations are selected from the group consisting of oxynitrides (O/N), carbonitrides (C/N), boronitrides (B/N), thionitrides (S/N), hydroborides (H/B) and hydronitrides (H/N), with the proviso that it is not an anode material selected or derived from VN, MnN.

7. The anode or cathode of claim 6 wherein the active electrode material is electrically conductingly coated, in particular by a graphite or a graphene coating.

8. The anode or cathode of any one of claims 6 to 7, comprising an electronically active material in nanoparticulated form.

9. The anode or cathode of any one of claims 6 to 8, comprising an electronically conducting nanoparticulate binder, in particular poly(3,4-ethylenedioxythiophene) (PEDOT).

10. An anode or cathode comprising as active electrode material a p-doped or an n-doped material based on a basic semiconductor material selected from the group consisting of nitrides, carbides, borides and combinations thereof, wherein preferred combinations are selected from the group consisting of oxynitrides (O/N), carbonitrides (C/N), boronitrides (B/N), thionitrides (S/N), hydroborides (H/B) and hydronitrides (H/N), said anode or cathode comprising the electronically active material in nanoparticulated form, electrically conductingly coated, preferably by a graphite or a graphene coating, and said electrode comprising an electronically conducting nanoparticulate binder, in particular poly(3,4-ethylenedioxythiophene) (PEDOT).

11. The anode or cathode of claim 9 or 10, wherein the nanoparticulate electronically conducting binder is furthermore filled with electronically conducting nanoparticulate filler material.

12. The anode or cathode of claim 11, wherein the electronically conducting nanoparticulate filler material is selected from graphite, carbon black and combinations thereof.

13. A rechargeable lithium ion battery comprising at least an anode or a cathode of any one of claims 6 to 12.

14. The rechargeable lithium ion battery of claim 12 wherein the anode and the cathode both are selected from the anode or cathode of any one of claims 6 to 12.

15. The rechargeable lithium ion battery of claim 13 or 14 wherein the anode and the cathode are derived by n-doping and p-doping from the same basic semiconductor material.
